(19)

**Europäisches Patentamt**
**European Patent Office**
**Office européen des brevets**

(11)  **EP 4 745 812 A1**

(12)  **EUROPEAN PATENT APPLICATION**

(43) Date of publication:
**20.05.2026 Bulletin 2026/21**

(21) Application number: **25211209.9**

(22) Date of filing: **24.10.2025**

(51) International Patent Classification (IPC):
*G06F 21/55* (2013.01)   *G06F 21/57* (2013.01)
*G06N 3/0475* (2023.01)   *G06N 3/08* (2023.01)
*G06N 20/00* (2019.01)   *G06N 20/20* (2019.01)
*H04L 9/40* (2022.01)

(52) Cooperative Patent Classification (CPC):
**H04L 63/1425; G06F 21/552; G06F 21/554;
G06F 21/577; G06N 3/044; G06N 3/0442;
G06N 3/045; G06N 3/0455; G06N 3/0475;
G06N 3/08; G06N 20/00; G06N 20/20;
H04L 63/1433**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 US 202463717407 P
20.12.2024 US 202418990015**

(71) Applicant: **Microsoft Technology Licensing, LLC
Redmond, WA 98052-6399 (US)**

(72) Inventors:
- **BRUSS, Yosef**
  **Redmond, 98052-6399 (US)**
- **NUTKEVITCH, Noa**
  **Redmond, 98052-6399 (US)**
- **KISLEV, Maayan**
  **Redmond, 98052-6399 (US)**
- **OUAHMANE, Sami Ait**
  **Redmond, 98052-6399 (US)**
- **NAYAK, Vignesh**
  **Redmond, 98052-6399 (US)**
- **LIU, Yingqi**
  **Redmond, 98052-6399 (US)**
- **ANTMAN, Shany Klein**
  **Redmond, 98052-6399 (US)**
- **STAROSTA, Abraham**
  **Redmond, 98052-6399 (US)**

(74) Representative: **Page White Farrer
Bedford House
21a John Street
London WC1N 2BF (GB)**

(54)    **RESULTS INSIGHTS**

(57)    The present disclosure relates to systems and methods for identifying cybersecurity risks. The systems and methods use hybrid embeddings (20) to embed structured and unstructured data from security logs (12). The systems and methods use the hybrid embeddings (20) to detect an anomaly in the security logs to identify cybersecurity risks. The systems and methods receive from a generative artificial intelligence, GAI, model (116) a summary (30) for the identified cybersecurity risk.

FIG. 1

EP 4 745 812 A1

**Description**

**CROSS-REFERENCE TO RELATED APPLICATIONS**

This application claims priority to and the benefit of United States Provisional Patent Application No. 63/717,407, filed on November 7, 2024, which is hereby incorporated by reference in its entirety.

**BACKGROUND**

When analysts query security logs during an incident investigation for a cybersecurity risk, or a proactive threat hunting, analysts frequently explore hundreds and thousands of results. During an incident investigation or a proactive threat hunting, analysts perform multiple iterations using excessive machine resources and networking resources. The phase of exploring the hundreds and thousands of security logs, requires a significant usage of machine resources, effort, and time. Moreover, reviewing the large number of security logs forces the analysts to scroll through hundreds of records in an effort to identify the anomalies and distracts the analysts from the big picture they are working on, whether it is an incident that occurred or a hypothesis of a cybersecurity risk.

**BRIEF SUMMARY**

This summary is provided to introduce a selection of concepts that are further described below in the detailed description. This summary is not intended to identify key or essential features of the claimed subject matter, nor is it intended to be used as an aid in limiting the scope of the claimed subject matter.

Some implementations relate to a method. The method includes generating hybrid embeddings from security logs in response to receiving an input related to the security logs. The method includes detecting, using the hybrid embeddings, an anomaly in the security logs. The method includes dynamically generating a prompt with instructions for providing a summary of the anomaly. The method includes providing, to a generative artificial intelligence model, the prompt with the instructions. The method includes receiving, from the generative artificial intelligence model, the summary of the anomaly. The method includes providing an output summary of the anomaly to a security mitigation agent configured to perform a security improvement operation.

Some implementations relate to a device. The device includes a memory to store data and instructions; and a processor operable to communicate with the memory, wherein the processor is operable to: generate hybrid embeddings from security logs in response to receiving an input; detect, using the hybrid embeddings, an anomaly in the security logs; dynamically generate a prompt with instructions for providing a summary of the anomaly; provide, to a generative artificial intelligence model, the prompt with the instructions; receive, from the generative artificial intelligence model, the summary of the anomaly; and provide an output summary of the anomaly to a security mitigation agent configured to perform a security improvement operation.

Some implementations relate to a computer-readable storage medium including instructions that, when executed by a processor, cause the processor to: generate hybrid embeddings from security logs in response to receiving an input; detect, using the hybrid embeddings, an anomaly in the security logs; dynamically generate a prompt with instructions for providing a summary of the anomaly; provide, to a generative artificial intelligence model, the prompt with the instructions; receive, from the generative artificial intelligence model, the summary of the anomaly; and provide an output summary of the anomaly to a security mitigation agent configured to perform a security improvement operation.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims, or may be learned by the practice of such embodiments as set forth hereinafter.

**BRIEF DESCRIPTION OF DRAWINGS**

In order to describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:

Fig. 1 illustrates an example environment for identifying cybersecurity risks in accordance with implementations of the present disclosure.

Fig. 2 illustrates an example method for identifying cybersecurity risks in accordance with implementations of the present disclosure.

Fig. 3 illustrates an example method for detecting anomalies in security logs in accordance with implementations of the present disclosure.

Fig. 4 illustrates an example method for performing a clustering of security logs in accordance with implementations of the present disclosure.

Fig. 5 illustrates an example graphical user interface (GUI) of a detected anomaly and a summary of the anomaly in accordance with implementations of the present disclosure.

Fig. 6 illustrates an example method for identifying cybersecurity risks in accordance with implementations of the present disclosure.

Fig. 7 illustrates components that may be included within a computer system.

## DETAILED DESCRIPTION

This disclosure generally relates to identifying cybersecurity risks. When analysts query security logs during an incident investigation for a cybersecurity risk, or a proactive threat hunting, analysts frequently explore hundreds and thousands of results. During an incident investigation or a proactive threat hunting, analysts perform multiple iterations using excessive machine resources and networking resources. The phase of exploring the hundreds and thousands of security logs, requires a significant usage of machine resources, effort, and time. Moreover, reviewing the large number of security logs forces the analysts to scroll through hundreds of records in an effort to identify the anomalies and distracts the analysts from the big picture they are working on, whether it is an incident that occurred or a hypothesis of a cybersecurity risk. An analyst reviewing a large number of logs is also prone to human error, particularly if they are required to work at speed (e.g., in response to a developing threat). In the present context, a human error can have significant security consequences, e.g., if a threat goes undetected because of human error. Reliably automating the detection of anomalies in security logs therefore yields a consequent improvement in system/network security. Automating the detection of anomalies in security logs reduces usage of machine resources and networking resources during the review process resulting in an improvement in computing by reducing the network resources needed (e.g., fewer network communications needed, using less machine related resources) for supporting the incident investigation.

The present disclosure provides systems and methods for automatically identifying cybersecurity risks. A cybersecurity risk is a potential threat for exposure or loss resulting from a cyberattack or data breach on a digital system or network. The systems and methods use hybrid embeddings that embed structured (e.g., identifiers) and unstructured (e.g., text description) data from security logs. A security log is a record related to security events maintained by the system to detect and analyze the security incidents. The systems and methods detect at least one anomaly in the security log data and use the detected anomaly to identify cybersecurity risks. The systems and methods use a generative artificial intelligence (GAI) model to generate a summary for the identified cybersecurity risk. One example of the GAI model is GPT-4. In some implementations, the systems and methods identify three anomalies in the security log data and generates three summaries, one summary for each anomalies identified. In some implementations, the systems and methods cluster security log data to remove unwanted noise. The present disclosure includes a number of practical applications that provide benefits and/or solve problems associated with identifying cybersecurity risks. Examples of these applications and benefits are discussed in further detail below.

One example benefit is clustering and anomaly detection reduces usage of machine resources and networking resources. Another example benefit is clustering the security logs to filter out noise, enabling more precise analysis by excluding or including specific insights for further investigation. Another example benefit is providing action options that allow users to focus on or exclude specific security logs, streamlining the investigation workflow, and enabling more targeted security investigations. Another example benefit is providing a unique combination of clustering and anomaly detection providing insights that help users to quickly focus on the most relevant results and explore the results more efficiently. Another example benefit is automatically detecting anomalies in security logs allowing users to focus on unusual patterns that may indicate potential threats. In some implementations (which happen to involve a human), another benefit includes errors can also be reduced.

In some implementations, the systems and methods generate hybrid embeddings in response to an input for a cybersecurity analysis received from a user. In some implementations, the hybrid embeddings are a combination of ordinal encodings and security transformer model (STM) embeddings. The STM is an encoder based large language model trained on security logs. An STM or other ML model trained on a security-specific dataset is able to extract semantic embeddings capturing domain-specific security knowledge learned in training.

In the following examples, information is extracted in the form of embeddings (fixedlength numerical vectors). In some examples a "security transformer model" (STM) is used to generate the embeddings, where that term is used herein to mean a transformer model (that is, an ML component with a transformer neural network architecture) trained on a security-specific dataset. An STM is one example of a domain-specific ML model specific to the domain of security.

In one implementation, an encoder-only transformer architecture is used, with an STM pretrained from scratch on existing security logs using a transformer architecture described in DeBERTa (arXiv:2006.03654). The STM comprises a series of encoder layers. It first transforms an input log into a list of tokens and then transforms the tokens into vectors of fixed length. The STM also adds positional encoding vectors to help the model understand the order of tokens. The resulting vector is fed into a sequence of encoding layers where the STM model uses an attention mechanism to learn relations between tokens, and to create semantic meaning. A log embedding is generated at a final one of the encoding layers. In some embodiments, weights in the encoding layers are trained with masked language modelling task. In this task, parts of the security logs are masked out and the STM is trained to predict the masked out parts. After sufficient training, the STM can predict masked out tokens with high accuracy. At this point, it is able to generate high quality log embeddings (STM embeddings) capturing security-specific semantic knowledge.

An STM or other ML model trained on a security-specific dataset is able to extract semantic embeddings capturing domain-specific security knowledge learned in training. In the following examples, an STM is implemented as an encoder-based transformer model (e.g. the encoder only transformer model described above).

In some implementations, the systems and methods use an ordinal encoder to generate the ordinal encodings of data from the structured columns in the security logs. In some implementations, the systems and method use the STM to generate embeddings of data from the unstructured columns in the security log.

The systems and methods identify anomalies in the hybrid embeddings and dynamically generate a prompt to provide to a generative AI model. Examples of generative AI models include Generative Pre-trained Transformer (GPT) models (e.g., GPT-3 or GPT-4), LlaMA, and GEMINI. Examples of generative AI models also include text-to-image models, such as, DALL-E. Generative AI models generate content, such as text, images, video, audio, or other data in response to a question or prompt. Another example of a generative AI model includes multi-modal models. In some implementations, the question or prompt is multi-modal input, and the generative AI model processes the multi-modal input to generate content. For example, the generative AI model receives non-text input and generates an output of text. Another example includes, the generative AI model receives text input and generates a non-text output. Generative AI models learn the patterns and structure of the input training data and generate new data that has similar characteristics to the input data in response to prompts. The prompt includes instructions, and the generative AI model generates a summary of the detected anomaly in response to the instructions provided in the prompt. The systems and methods generate a better prompt using the hybrid embeddings resulting in a more accurate response provided by the generative AI models in response to the prompt. The summary and the detected anomaly are presented on a display.

One technical advantage of the systems and methods of the present disclosure is enhanced accuracy. The STM model is trained on security logs enabling the STM model to capture nuances and patterns unique to threat detections in cybersecurity ensuring that the insights generated are accurate and relevant to the content, minimizing false positives and improving a quality of an investigation. Another technical advantage of the systems and methods of the present disclosure is automating the identification of anomalies. Another technical advantage of the systems and methods of the present disclosure is automatically filtering out noise from the security logs.

The systems and methods automate the analysis of the security logs and identify anomalies present in the security logs. The systems and methods streamline the security investigation process reducing the time and effort required to analyze the security logs.

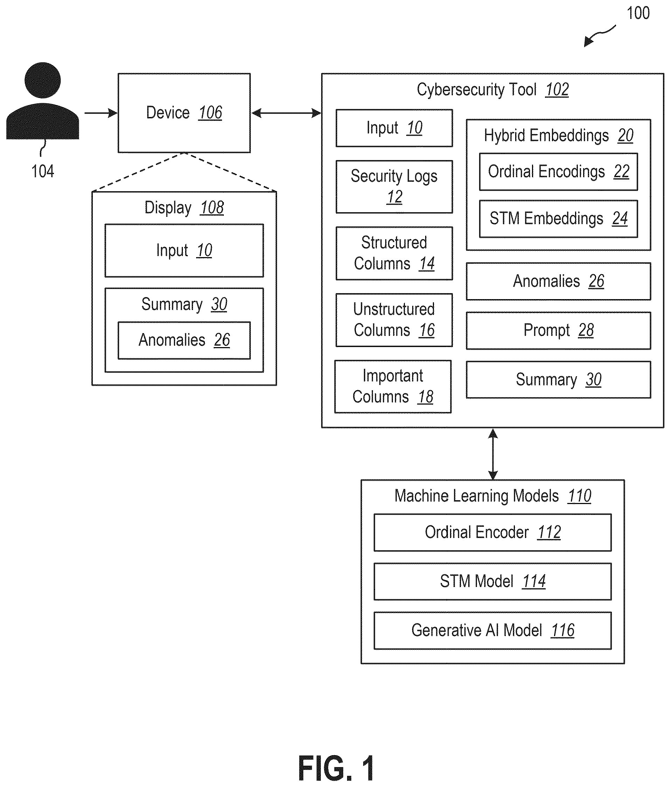

Referring now to Fig. 1, illustrated is an example environment 100 that identifies cybersecurity risks. The environment 100 includes a cybersecurity tool 102 that aids users 104 in identifying cybersecurity risks. In some implementations, the cybersecurity tool 102 is a generative artificial intelligence (AI) assistant that uses one or more machine learning models 110 in identifying cybersecurity risks.

The cybersecurity tool 102 is in communication with a device 106 via a network. In some implementations, the cybersecurity tool 102 is on a cloud server remote from the device 106 accessed through the network. For example, the cybersecurity tool 102 is hosted on virtual machines in the cloud. The network may include one or multiple networks and may use one or more communication platforms and/or technologies suitable for transmitting data. The network may refer to any data link that enables transport of electronic data between devices of the environment 100. The network may refer to a hardwired network, a wireless network, or a combination of a hardwired network and a wireless network. In one or more implementations, the network includes the internet. The network may facilitate communication between the various computing devices. The server may include one or more computing devices (e.g., including processing units, data storage, etc.) organized in an architecture with various network interfaces for connecting to and providing data management and distribution across one or more client systems. While one device is illustrated, the cybersecurity tool 102 may be in communication with a plurality of devices.

A user 104 accesses the cybersecurity tool 102 using a device 106. The device 106 may be representative of one or multiple devices and may refer to various types of computing devices. For example, the device 106 may include a mobile device such as a mobile telephone, a smartphone, a personal digital assistant (PDA), a tablet, a laptop, or any other portable device. Additionally, or alternatively, the device 106 may include one or more non-mobile devices such as a desktop computer, server device, or other non-portable device. In some implementations, the device 106 may be communicatively coupled (e.g., wired or wirelessly) to a display 108 having a user interface thereon providing a display of system content.

In some implementations, the cybersecurity tool 102 is accessed through the network. For example, a uniform resource locator (URL) configured to an end point of the cybersecurity tool 102 is provided to the device 106 that the user 104 may access using a browser on the device 106. Another example includes an application on the device 106 of the user 104 provides access to the cybersecurity tool 102.

The user 104 uses the device 106 to provide a cybersecurity related input to the cybersecurity tool 102. In some implementations, the input 10 is multi-modal input. In some implementations, the input 10 is a query that requests a review of the security logs 12 in connection with an incident investigation. An incident investigation is investigating a concrete cyberattack by a security analyst to determine its entire scope and chain of events. The incident investigation is the process of hunting for case files that contain pieces of evidences, suspects, insights collected and curated by security experts and machine learning models, or comments and logs in order to find out why IT systems or data may have been breached. In some implementations, the input 10 is a proactive threat hunting and requests a review of the security logs 12. Threat hunting is searching through the organizational security relevant logs to identify cyberattacks, without concrete evidence for an ongoing incident. Threat hunting is based on security knowledge, potential weaknesses in a specific organization, etc.

The cybersecurity tool 102 receives the input 10 and accesses the security logs 12. In some implementations, the security logs 12 are obtained from a datastore. In some implementations, the user 104 provides the security logs 12 with the input 10. In some implementations, the security logs 12 include text. In some implementations, the security logs 12 include images. In some implementations, the security logs 12 include videos. In some implementations, the security logs 12 include audio.

In some implementations, the cybersecurity tool 102 uses a machine learning model 110 to infer structured columns 14 and unstructured columns 16 in the security logs 12. Structured columns 14 include data in the security logs 12 that adheres to a pre-defined data model. Unstructured columns 16 include data in the security logs 12 that does not have a pre-defined format. For example, the data in the security logs 12 includes any combination of text, audio, video, or images.

In some implementations, the cybersecurity tool 102 uses the machine learning model 110 to extract important columns 18 from the structured columns 14 and the unstructured columns 16. The important columns 18 are columns that are related to security issues and contain the most important information used in finding anomalies. Each security database table has multiple columns. Some of the columns may not be relevant to threat hunting while other columns are relevant to threat hunting. In some implementations, the important columns 18 are identified by security analysts as columns that may include anomalies or clusters of security related events. In some implementations, the important columns 18 are identified in response to the information in the input 10. For example, columns that relate to the input 10 are identified as important columns 18.

The cybersecurity tool 102 generates ordinal encodings 22 from the data obtained from the structured columns 14 in the security logs 12. In some implementations, an ordinal encoder 112 is used to generate the ordinal encodings 22. The ordinal encodings 22 convert the data from the structured columns 14 in the security logs 12 into numerical values. In some such implementations, the pre-defined data model defines categories (e.g., predetermined classes) that can be assigned to a security log in a structured column (e.g., using machine learning classification). The ordinal encoder 122 converts such categorical data into a numerical format used in anomaly detection.

The cybersecurity tool 102 generates STM embeddings 24 from the data obtained from the unstructured columns 16 in the security logs 12. STM embeddings are vectors of numbers that encode semantic information about the security logs. In some implementations, a STM model 114 is used to generate the STM embeddings 24. The STM model 114 is trained on security logs enabling the STM model 114 to capture nuances and patterns unique to cybersecurity risks. Training the STM model 114 on security logs, allows the STM model 114 to handle the data in the unstructured columns 16 better as compared to the ordinal encoder 112. In some implementations, the STM model 114 is pretrained on a hybrid of publicly available security logs that cover a variety of security log types (e.g., Host, Application, Webapp, Network, Kubernetes, Cloud, and Identity) and private security logs inaccessible to the public. One example of private security logs is security logs of a company. In some implementations, the STM model 114 is trained using MLM (masked language modeling) loss. Unlike a typical MLM loss which randomly selects a token to be masked, the training of the STM model 114 skips the delimiters when masking input since delimiter characters are over-represented in security logs, helping the STM model 114 converge faster during training. Training the STM model 114 on security logs ensures that the insights generated by the STM model 114 are accurate and relevant to the context, minimizing false positives and improving the quality of an investigation included in a input 10.

The cybersecurity tool 102 generates hybrid embeddings 20 for the data obtained from the security logs 12. In some implementations, the cybersecurity tool 102 concatenates the ordinal encodings 22 and the STM embeddings 24 to generate the hybrid embeddings 20. The hybrid embeddings 20 captures the information from the security logs 12 by including embeddings for both the structured data and the unstructured data from the security logs 12. The use of hybrid embeddings enables information extracted using 'classical' security analysis tools and techniques (such as pre-defined data model(s) and/or discriminative machine learning tool(s), such as threat classifiers or security classifiers) to be combined with information extracted using state-of-the art/emerging tools, such as transformer models and/or generative models trained on large datasets. The former is captured in the ordinal embeddings while the latter is captured in the STM embeddings. Classical security tools are generally 'simpler' and less flexible, but on the other hand can be used effectively and reliability for particular tasks for which they have been designed or trained and are consequently expected to yield high-quality ordinal embeddings but with potentially more restricted information content. Emerging tools are more flexible and potentially more powerful (e.g., because they are better suited to interpreting unstructured data), but on the other hand can be more prone to unexpected or hard to explain behavior. STM embeddings generated using such models can potentially capture a greater range of information content but may be somewhat less reliable. Combining both approaches through hybrid embeddings synergistically leverages the robustness of the former with the additional power and flexibility of the latter, ultimately yielding improved anomaly detection performance on the hybrid embeddings.

In some implementations, the cybersecurity tool 102 uses the hybrid embeddings to identify any anomalies 26 in the security logs 12. An anomaly is any unusual activity that occurred in the security logs 12. One example of an anomaly is an error. Another example of an anomaly is an unexpected event. For example, an anomaly is detected for an account logon success when an unsuccessful account logon is expected. Another example of an anomaly is a command line with an unusual structure (e.g., longer than expected or shorter than expected). Another example of an anomaly is a user logging in from a different location than a previously logged location (e.g., logging in from Canada when a home location is the US). Another example of an anomaly is command lines having suspicious encoded commands and reaching to external networks (e.g., internet) to download malicious payloads (e.g., executable, scripts, etc.).

In some implementations, the cybersecurity tool 102 uses an isolation forest to identify the anomalies 26 in the hybrid embeddings 20. The isolation forest yields a score on each embedding. The score indicates how anomalous each anomaly is in each embedding. For example, the cyber security tool 102 takes the indices of the three most anomalous embeddings and those correspond to the three most anomalous logs identified by the cyber security tool 102. In some implementations, an anomaly is detected as an outlier in the statistical sense. In such cases, an outlier detection method, such as random forest-based outlier detection, is used to detect an anomaly as an outlier hybrid embedding in a vector space of the hybrid embeddings.

The cybersecurity tool 102 uses the anomalies 26 to dynamically generate a prompt 28 with instructions for a generative AI model 116 to use in generating a summary 30 with an explanation of the anomalies 26 identified in the hybrid embeddings 20. Examples of the generative AI model 116 include a Generative Pre-trained Transformer (GPT) model (e.g., GPT-3 or GPT-4), LlaMA, and GEMINI. In some implementations, the cybersecurity tool 102 modifies the important columns 18, column summary, and benign logs to dynamically generate the prompt 28. The prompt is generated dynamically in response to detecting the anomaly, e.g., based on a hybrid embedding and/or the underlying security log containing or exhibiting the anomaly. The prompt contains placeholders for the important column statistics, benign logs, and anomalies.

In some implementations, the cybersecurity tool 102 calculates statistics of how rare the values in the important columns 18 are. In some implementations, the cybersecurity tool 102 uses the STM model 114 to subsample a set of benign security logs for the generative AI model 116 to compare the anomalies 26 with and help the generative AI model 116 to identify unique aspects of the anomaly 26 and improve the summary 30 generated.

In some implementations, the cybersecurity tool 102 inserts the important columns 18, the column summary, the statistics calculated, and the being logs into the placeholders in the prompt 28 with instructions for the generative AI model 116 to provide an explanation for the anomalies 26 focusing on the important columns 18 with the rare values. The generative AI model 116 generates the summary 30 in response to the instructions in the prompt 28. The generative AI model 116 also generates a title using the summary 30. A title is a short description of the anomaly 26. The title aids the user 104 in gaining a quick understanding of the scope of the anomaly and to quickly identify the anomaly and differentiate the anomaly from other anomalies generated for the same results set. The summary 30 provides natural language descriptions of the anomalies 26 and insights explaining a reason for the anomalies 26.

The anomalies 26 and the summary 30 are presented on the display 108 in response to the input 10. In some implementations, the cybersecurity tool 102 provides recommendations for preventing the identified cybersecurity risks or actions to take to prevent the cybersecurity risks. In some implementations, the user 104 uses the information presented on the display 108 to identify security risks and take actions to prevent the security risks. For example, the user 104 selects to exclude a specific security log 12 from the analysis. Another example includes the user 104 selects to focus of a specific security log 12 in investigating the security risk. In some implementations, the actions are automatically implemented by the cybersecurity tool 102. For example, the cybersecurity tool 102 excludes specific security logs 12 from the summary 30 provided to the user 104. Another example includes the cybersecurity tool 102 highlighting a specific security log 12 in the summary 30 where the anomaly 26 was detected.

In some implementations, the cybersecurity tool 102 uses a machine learning model 110 to perform clustering on the security logs 12. The machine learning model 110 filters the columns of the security logs 12 based on entropy and groups the filtered security logs into clusters. The machine learning model 110 subsamples each cluster and uses the subsamples of each cluster to generate a prompt 28 to provide to the generative AI model 116 with instructions for providing a summary of the clusters. In some implementations, the prompt 28 includes instructions for describing the key common features and patterns within the cluster subsample. In some implementations, the prompt 28 includes instructions for highlighting what differentiates the cluster subsample from the other cluster subsample datasets. In some implementations, the prompt 28 includes instructions for focusing on up to three columns capturing the common properties of the cluster subsample.

The generative AI model 116 provides a summary 30 of the identified clusters. In some implementations, the summary 30 is displayed on the display 108 to the user 104. In some implementations, the cybersecurity tool 102 uses the summary 30 to automatically remove security logs 12 from the anomalies analysis. For example, security logs 12 with duplicative information are automatically removed from the anomaly analysis in response to the clustering. Another example includes security logs 12 are added to the anomaly analysis in response to the clustering. The clustering functionality is used by the cybersecurity tool 102 to remove noise from the security logs 12 enabling more precise analysis by the cybersecurity tool 102 by excluding or including specific insights for further analysis.

In some implementations, the cybersecurity tool 102 performs an evaluation of the anomalies 26 detected and the summary 30 provided by the generative AI model 116 and generates an anomaly score. In some implementations, the cybersecurity tool 102 performs an evaluation of the clustering performed on the security logs 12 and the summary provided by the generative AI model 116 and generates a cluster score. One example equation that the cybersecurity tool 102 uses to generate the anomaly score and the cluster score is illustrated below in equation (1).

$$\text{Score} = [\text{\# of ungrounded claims} * -15] + [\text{\# of catastrophic omission} * - 5] + [\text{Clarity}/2] + [\text{Usefulness}] \tag{1}$$

The number of ungrounded claims is a measure on the number of invalid or hallucinated responses produced by the solution. While having just one ungrounded claim can be a significant problem, that amount of ungrounded claims is important to identifying a quality of the responses produced. The number of omissions is a measure of what is missing that was fundamental to arrive at a correct solution. The quantity of omissions is important in determining a quality of the responses produced. Clarity is a measure of ease of understanding with respect to the target audience, graded on a scale of 1 to 10, where 1 has no clarity and could not be understood and 10 has clarity and was understood. Usefulness is a measure of how well the solution helped the target audience, graded on a scale of 1-10. For example, a solution might have no ungrounded claims, no omissions, and be understandable to the reader, but the solution may have provided little to no value in helping solve the goal of the user. Another example includes that despite omissions or ungrounded claims, the result was still useful to the user.

One example of usefulness includes anomalies that represent events that the user 104 would choose to investigate further. Another example of usefulness includes clusters that represents events that the user 104 would choose to investigate as a group. Another example of usefulness includes clusters that represent events that the user 104 would choose to exclude. One example of clarity includes the title matches the description. Another example of clarity includes the title is clear. Another example of clarity includes that important columns are mentioned. Another example of clarity includes the description is clear. One example of ungrounded claims is that the description matches the anomaly or cluster. Another example of ungrounded claims is that the second part of the description matches non anomaly or clusters. One example of an omission is that no critical anomaly was missed, or non-relevant clusters are identified.

The anomaly score or the cluster score is presented on the display and the user 104 may use the anomaly score or the cluster score in determining a level of confidence of the information presented on the display 108 in response to the input 10. In some implementations, the anomaly score or the cluster score is used by the user 104 to determine a quality of the outputs of the cybersecurity tool 102. In some implementations, the anomaly score or the cluster score is used in determining a level of usefulness for further security investigation. For example, high scores may indicate further security investigation is useful while low scores may indicate that further security investigations may not be useful.

Once an anomaly 26 is detected, appropriate security mitigation action(s) may be taken such as an action to alert users of the computing system under attack (e.g. by displaying an alert, summary or explanation pertaining to the anomaly), modify a setting or parameter of a computing system (e.g. a computer, or a network of computers), isolate (e.g., quarantine, disconnect, deactivate etc.) an entity (e.g. user, device, service, process, application etc.) within such a computer system or modify an access privilege associated with such an entity. An anomaly detection may trigger a further analysis to determine whether related activity is malicious or benign.

The environment 100 automates the data exploration of security logs 12 and streamlines the process of an incident investigation or a proactive threat hunting. The environment 100 allows the users 104 to quickly focus on the most relevant security logs 12 to the incident investigation or threat hunting by providing the summary 30 of any identified anomalies 26.

In some implementations, one or more computing devices (e.g., servers and/or devices) are used to perform the processing of the environments 100. The one or more computing devices may include, but are not limited to, server devices, cloud virtual machines, personal computers, a mobile device, such as, a mobile telephone, a smartphone, a PDA, a tablet, or a laptop, and/or a non-mobile device. The features and functionalities discussed herein in connection with the various systems may be implemented on one computing device or across multiple computing devices. For example, the cybersecurity tool 102 and the machine learning models 110 are implemented on a single computing device. Moreover, in some implementations, one or more subcomponent of the feature and functionalities discussed herein may be implemented are processed on different server devices of the same or different cloud computing networks. For example, the cybersecurity tool 102 and the machine learning models 110 are implemented on different server devices.

In some implementations, each of the components of the environment 100 is in communication with each other using any suitable communication technologies. In addition, while the components of the environment 100 are shown to be separate, any of the components or subcomponents may be combined into fewer components, such as into a single component, or divided into more components as may serve a particular implementation. In some implementations, the components of the environment 100 include hardware, software, or both. For example, the components of the environment 100 may include one or more instructions stored on a computer-readable storage medium and executable by processors of one or more computing devices. When executed by the one or more processors, the computer-executable instructions of one or more computing devices can perform one or more methods described herein. In some implementations, the components of the environment 100 include hardware, such as a special purpose processing device to perform a certain function or group of functions. In some implementations, the components of the environment 100 include a combination of computer-executable instructions and hardware.

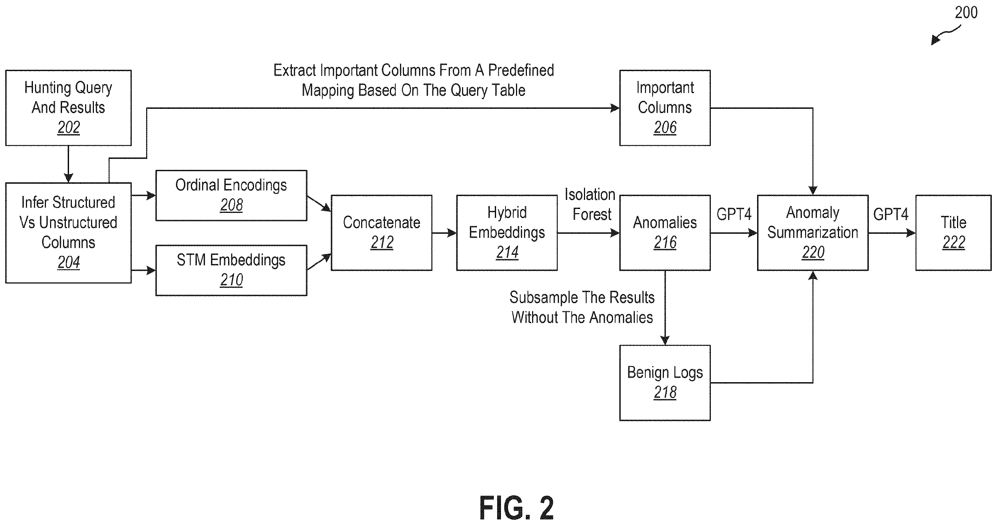

Fig. 2 illustrates an example method 200 for identifying cybersecurity risks. The actions of the method 200 are discussed in reference to the architecture of Fig. 1.

At 202, the method 200 includes receiving a query with security logs. In some implementations, the cybersecurity tool 102 receives the input 10 with the security logs 12.

At 204, the method 200 includes inferring structured and unstructured columns in the security logs. In some implementations, the cybersecurity tool 102 infers the structured columns 14 and unstructured columns 16 from the security logs 12.

At 206, the method 200 includes extracting important columns from the security logs 12. In some implementations, the cybersecurity tool 102 extracts important columns 18 using a predefined mapping based on a table provided in the input 10.

At 208, the method 200 includes generating ordinal encodings. In some implementations, the cybersecurity tool 102 generates ordinal encodings 22 from the data in the structured columns 14.

At 210, the method 200 includes generating STM embeddings. In some implementations, the cybersecurity tool 102 generates STM embeddings 24 from the data in the unstructured columns 16.

At 212, the method 200 includes concatenating the ordinal encodings and the STM embeddings. In some implementations, the cybersecurity tool 102 concatenates the ordinal encodings 22 and the STM embeddings 24.

At 214, the method 200 includes generating hybrid embeddings. In some implementations, the cybersecurity tool 102 generates hybrid embeddings 20 in response to the concatenation of the ordinal encodings 22 and the STM embeddings 24.

At 216, the method 200 includes identifying anomalies. In some implementations, the cybersecurity tool 102 identities one or more anomalies 26 in the hybrid embeddings 20.

At 218, the method 200 includes subsampling the results without the anomalies 26. In some implementations, the cybersecurity tool 102 subsamples benign security logs without the identified anomalies 26.

At 220, the method 200 includes generating an anomaly summarization. In some implementations, the cybersecurity tool 102 uses the generative AI model 116 to automatically generate a summary 30 of the anomalies 26 identified in the security logs 12.

At 222, the method 200 includes generating a title. In some implementations, the cybersecurity tool 102 uses the generative AI model 116 to generate a title.

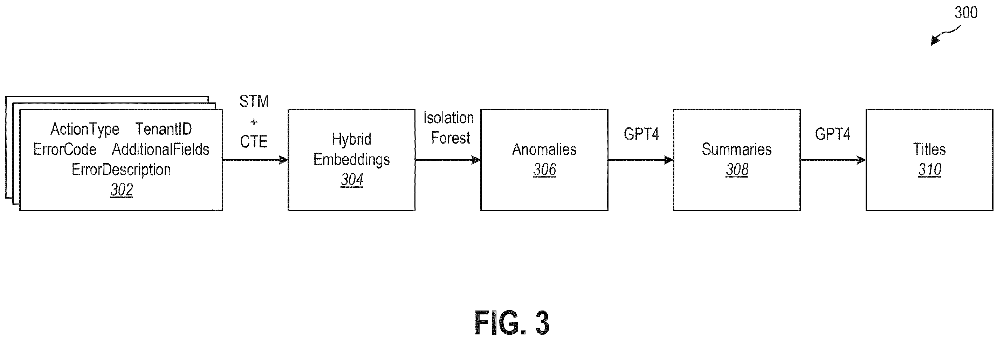

Fig. 3 illustrates an example method 300 for detecting anomalies in security logs. The actions of the method 300 are discussed below in reference to the architecture of Fig. 1.

At 302, the method 300 includes receiving security logs. In some implementations, the cybersecurity tool 102 receives the security logs 12.

At 304, the method 300 includes generating hybrid embeddings of the security logs. In some implementations, the cybersecurity tool 102 generates hybrid embeddings 20 of the security logs 12 by combining ordinal encodings 22 of the security logs 12 and STM embeddings 24 of the security logs 12.

At 306, the method 300 includes identifying anomalies in the security logs. In some implementations, the cybersecurity tool 102 uses an isolation forest to analyze the hybrid embeddings 20 to identify any anomalies 26 in the security logs 12.

At 308, the method 300 includes generating a summary. In some implementations, the cybersecurity tool 102 uses a generative AI model 116 to generate a summary 30 of the detected anomalies 26 in the security logs 12. In some implementations, the cybersecurity tool 102 identifies a plurality of anomalies 26 and produces a plurality of summaries 30, one summary for each anomaly identified. One example includes the cybersecurity tool 102 identifying three anomalies and generating three summaries, one summary for each anomalies identified.

At 310, the method 300 includes generating a title. In some implementations, the cybersecurity tool 102 uses the generative AI model 116 to generate the title.

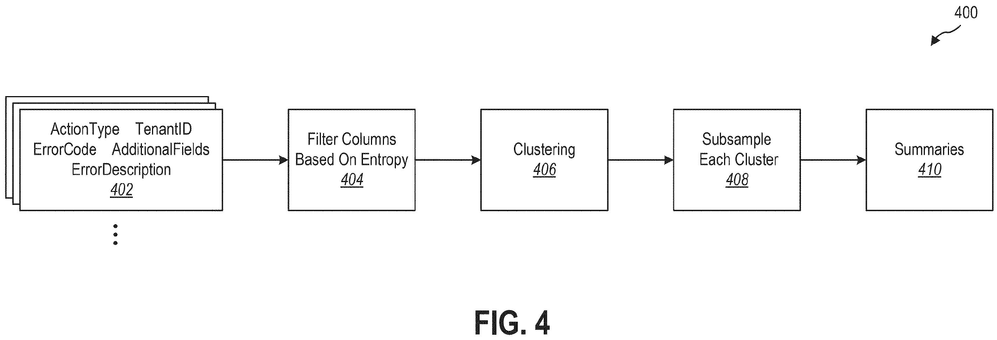

Fig. 4 illustrates an example method 400 for performing a clustering of security logs. The actions of the method 400 are discussed below in reference to the architecture of Fig. 1.

At 402, the method 400 includes receiving security logs. In some implementations, the cybersecurity tool 102 receives the security logs 12.

At 404, the method 400 includes filtering the security logs. In some implementations, the cybersecurity tool 102 filters the security logs 12 by columns based on entropy.

At 406, the method 400 includes clustering. In some implementations, the cybersecurity tool 102 groups the filtered security logs into clusters.

At 408, the method 400 includes subsampling each cluster. In some implementations, the cybersecurity tool 102 subsamples each cluster.

At 410, the method 400 includes providing a summary. In some implementations, the cybersecurity tool 102 uses the generative AI model 116 to provide a summary 30 of the clustering.

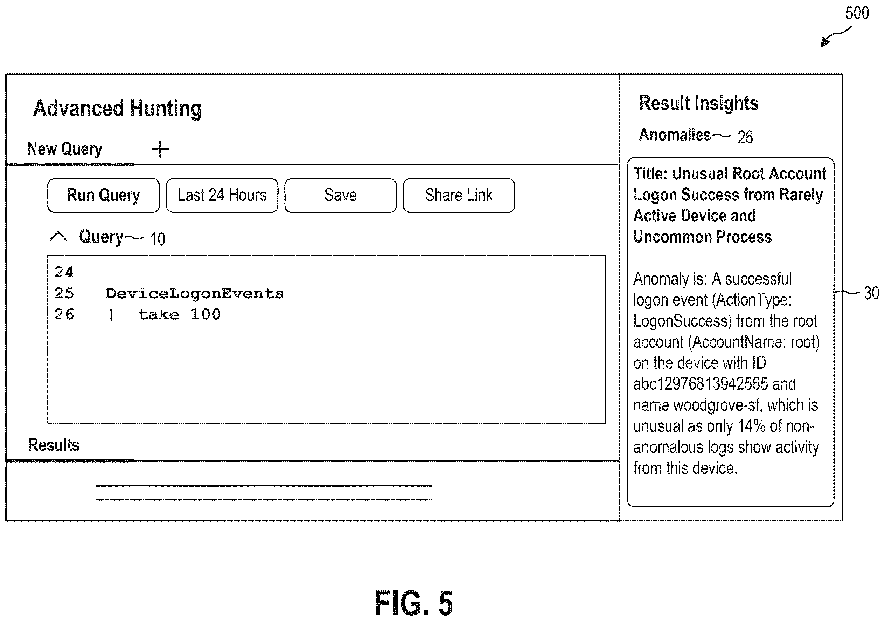

Fig. 5 illustrates an example graphical user interface (GUI) 500 displayed on a device 106 (108). The GUI 500 includes a input 10 provided by the user 104 (Fig. 1) to the cybersecurity tool 102 (Fig. 1) with a set of security logs 12 (Fig. 1). The GUI 500 includes an anomaly 26 automatically detected by the cybersecurity tool 102 in the security logs 12 and a summary 30 generated by the generative AI model 116 (Fig. 1) for the anomaly 26 in response to the input 10.

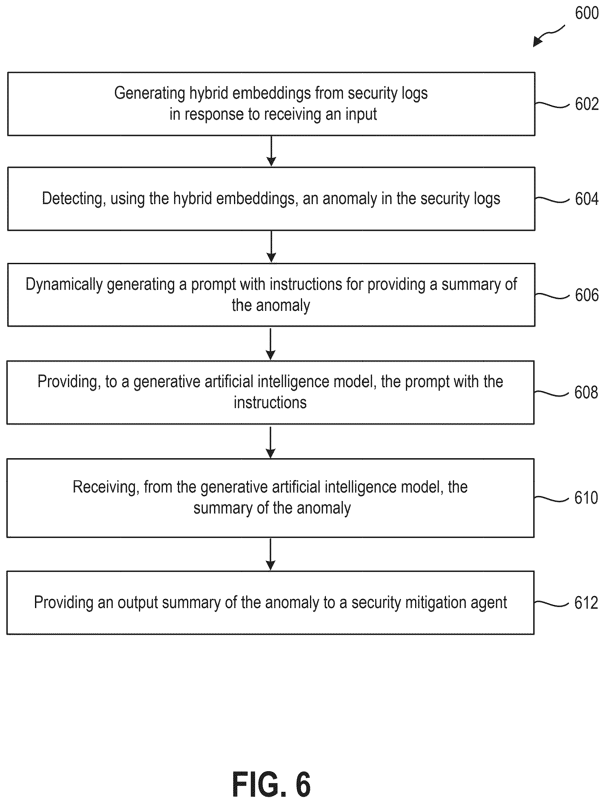

Fig. 6 illustrates an example method 600 for identifying cybersecurity risks. The actions of the method 600 are illustrated below in reference to Figs. 1-5.

At 602, the method 600 includes generating hybrid embeddings from security logs in response to receiving an input. In some implementations, the cybersecurity tool 102 generates hybrid embeddings 20 from the data obtained from security logs 12 in response to receiving the input 10 related to the security logs 12. In some implementations, the hybrid embeddings 20 include security transformer model (STM) embeddings of data generated by a STM model from unstructured columns in the security logs and ordinal encodings of data generated by an ordinal encoder from structured columns in the security logs. In some implementations, the STM model is pretrained on security logs using a modified masked language modeling loss.

At 604, the method 600 includes detecting, using the hybrid embeddings, an anomaly in the security logs. In some implementations, the cybersecurity tool 102 detects, using the hybrid embeddings 20, an anomaly 26 in the security logs 12. In some implementations, the anomaly is detected by a random forest analysis of the hybrid embeddings.

At 606, the method 600 includes dynamically generating a prompt with instructions for providing a summary of the anomaly. In some implementations, the cybersecurity tool 102 dynamically generates a prompt 28 with instructions for providing a summary 30 of the anomaly 26.

In some implementations, the cybersecurity tool 102 dynamically generates the prompt 28 by identifying important columns in the security logs 12 relevant to the input 10 and security analysis; calculating column summaries statistics of the important columns; subsampling, using the STM model, benign logs; and including the important columns, the column summaries statistics, and the benign logs in the prompt 28.

In some implementations, the cybersecurity tool 102 filters the security logs 12 based on entropy; creates a filtered subset of the security logs 12; groups the filtered subset of the security logs 12 into clusters; performs a subsampling of each cluster of the clusters; and dynamically generates a second prompt with instructions that the generative artificial intelligence model 116 uses to include information about each cluster in the summary 30.

In some implementations, the cybersecurity tool 102 automatically identifies a cluster of the clusters and dynamically generates the hybrid embeddings 20 from the data of the cluster. In some implementations, the cybersecurity tool 102 automatically identifies a cluster of the clusters and removes the cluster from the security logs 12 where the anomaly 26 is detected.

At 608, the method 600 includes providing, to a generative artificial intelligence model, the prompt with the instructions. In some implementations, cybersecurity tool 102 provides to a generative artificial intelligence model 116 the prompt 28 with the instructions. In some implementations, a generative artificial intelligence model 116 uses the instructions in the prompt 28 in providing a summary 30 of the anomaly 26.

At 610, the method 600 includes receiving, from the generative artificial intelligence model, the summary of the anomaly. The cybersecurity tool 102 receives the summary 30 of the anomaly 26 from the generative artificial intelligence model 116. In some implementations, the cybersecurity tool 102 receives from the generative artificial intelligence model 116, the summary 30 of the anomaly 26 in response to the generative artificial intelligence model 116 performing the instructions in the prompt 28.

At 612, the method 600 includes providing an output summary of the anomaly to a security mitigation agent configured to perform a security improvement operation. In some implementations, the cybersecurity tool 102 provides an output summary 30 of the anomaly 26 to a security mitigation agent configured to perform a security improvement operation. In some implementations, the cybersecurity tool 102 displays the summary 30 of the anomaly 26. In some implementations, the cybersecurity tool 102 generates an anomaly score of the anomaly 26 detected and the summary 30 provided by the generative artificial intelligence model 116 and presents on the display 108 the anomaly score. In some implementations, the cybersecurity tool 102 receives an action to take in response to the anomaly 26 and the summary 30 and the cybersecurity tool 102 implements the action. In some implementations, the cybersecurity tool 102 prevents a cybersecurity risk by implementing the action.

The method 600 automates the analysis of the security logs and automatically identifies anomalies present in the security logs.

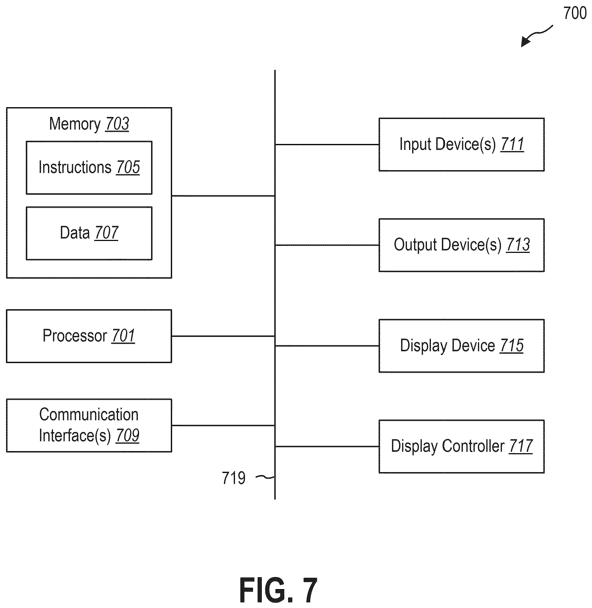

Fig. 7 illustrates components that may be included within a computer system 700. One or more computer systems 700 may be used to implement the various methods, devices, components, and/or systems described herein.

The computer system 700 includes a processor 701. The processor 701 may be a general purpose single or multi-chip microprocessor (e.g., an Advanced RISC (Reduced Instruction Set Computer) Machine (ARM)), a special purpose microprocessor (e.g., a digital signal processor (DSP)), a graphics processing unit (GPU), a microcontroller, a programmable gate array, etc. The processor 701 may be referred to as a central processing unit (CPU). Although just a single processor 701 is shown in the computer system 700 of Fig. 7, in an alternative configuration, a combination of processors (e.g., an ARM and DSP) could be used.

The computer system 700 also includes memory 703 in electronic communication with the processor 701. The memory 703 may be any electronic component capable of storing electronic information. For example, the memory 703 may be embodied as random access memory (RAM), read-only memory (ROM), magnetic disk storage mediums, optical storage mediums, flash memory devices in RAM, on-board memory included with the processor, erasable programmable read-only memory (EPROM), electrically erasable programmable read-only memory (EEPROM) memory, registers, and so forth, including combinations thereof.

Instructions 705 and data 707 may be stored in the memory 703. The instructions 705 may be executable by the processor 701 to implement some or all of the functionality disclosed herein. Executing the instructions 705 may involve the use of the data 707 that is stored in the memory 703. Any of the various examples of modules and components described herein may be implemented, partially or wholly, as instructions 705 stored in memory 703 and executed by the processor 701. Any of the various examples of data described herein may be among the data 707 that is stored in memory 703 and used during execution of the instructions 705 by the processor 701.

A computer system 700 may also include one or more communication interfaces 709 for communicating with other electronic devices. The communication interface(s) 709 may be based on wired communication technology, wireless communication technology, or both. Some examples of communication interfaces 709 include a Universal Serial Bus (USB), an Ethernet adapter, a wireless adapter that operates in accordance with an Institute of Electrical and Electronics Engineers (IEEE) 802.11 wireless communication protocol, a Bluetooth® wireless communication adapter, and an infrared (IR) communication port.

A computer system 700 may also include one or more input devices 711 and one or more output devices 713. Some examples of input devices 711 include a keyboard, mouse, microphone, remote control device, button, joystick, trackball, touchpad, and lightpen. Some examples of output devices 713 include a speaker and a printer. One specific type of output device that is typically included in a computer system 700 is a display device 715. Display devices 715 used with embodiments disclosed herein may utilize any suitable image projection technology, such as liquid crystal display (LCD), light-emitting diode (LED), gas plasma, electroluminescence, or the like. A display controller 717 may also be provided, for converting data 707 stored in the memory 703 into text, graphics, and/or moving images (as appropriate) shown on the display device 715.

The various components of the computer system 700 may be coupled together by one or more buses, which may include a power bus, a control signal bus, a status signal bus, a data bus, etc. For the sake of clarity, the various buses are illustrated in Fig. 7 as a bus system 719.

In some implementations, the various components of the computer system 700 are implemented as one device. For example, the various components of the computer system 700 are implemented in a mobile phone or tablet. Another example includes the various components of the computer system 700 implemented in a personal computer. Another example includes the various components of the computer system 700 implemented in the cloud. Another example includes the various components of the computer system 700 implemented on an edge device.

As illustrated in the foregoing discussion, the present disclosure utilizes a variety of terms to describe features and advantages of the model evaluation system. Additional detail is now provided regarding the meaning of such terms. For example, as used herein, a "machine learning model" refers to a computer algorithm or model (e.g., a classification model, a clustering model, a regression model, a language model, an object detection model, a probabilistic graphical model) that can be tuned (e.g., trained) based on training input to approximate unknown functions. For example, a machine learning model may refer to a neural network (e.g., a convolutional neural network (CNN), deep neural network (DNN), recurrent neural network (RNN)), or other machine learning algorithm or architecture that learns and approximates complex functions and generates outputs based on a plurality of inputs provided to the machine learning model. As used herein, a "machine learning system" may refer to one or multiple machine learning models that cooperatively generate one or more outputs based on corresponding inputs. For example, a machine learning system may refer to any system architecture having multiple discrete machine learning components that consider different kinds of information or inputs.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various implementations.

Computer-readable mediums may be any available media that can be accessed by a general purpose or special purpose computer system. Computer-readable mediums that store computer-executable instructions are non-transitory computer-readable storage media (devices). Computer-readable mediums that carry computer-executable instructions are transmission media. Thus, by way of example, and not limitation, implementations of the disclosure can comprise at least two distinctly different kinds of computer-readable mediums: non-transitory computer-readable storage media (devices) and transmission media.

As used herein, non-transitory computer-readable storage mediums (devices) may include RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, a datastore, or another data structure), ascertaining and the like. Also, "determining" can include receiving (e.g., receiving information), accessing (e.g., accessing data in a memory) and the like. Also, "determining" can include resolving, selecting, choosing, establishing, predicting, inferring, and the like.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one implementation" or "an implementation" of the present disclosure are not intended to be interpreted as excluding the existence of additional implementations that also incorporate the recited features. For example, any element described in relation to an implementation herein may be combinable with any element of any other implementation described herein. Numbers, percentages, ratios, or other values stated herein are intended to include that value, and also other values that are "about" or "approximately" the stated value, as would be appreciated by one of ordinary skill in the art encompassed by implementations of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the spirit and scope of the present disclosure, and that various changes, substitutions, and alterations may be made to implementations disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the implementations that falls within the meaning and scope of the claims is to be embraced by the claims.

The present disclosure may be embodied in other specific forms without departing from its spirit or characteristics. The described implementations are to be considered as illustrative and not restrictive. The scope of the disclosure is, therefore, indicated by the appended claims rather than by the foregoing description. Changes that come within the meaning and range of equivalency of the claims are to be embraced within their scope.

**Claims**

1.  A method comprising:

    generating (602) hybrid embeddings (20) from security logs (12) in response to receiving an input (10);
    detecting (604), using the hybrid embeddings (20), an anomaly (26) in the security logs (12);
    dynamically (606) generating a prompt (28) with instructions for providing a summary (30) of the anomaly (26);
    providing (608), to a generative artificial intelligence model (116), the prompt (28) with the instructions;
    receiving (610), from the generative artificial intelligence model (116), the summary (30) of the anomaly (26); and
    providing (612) an output summary (30) of the anomaly (26) to a security mitigation agent configured to perform a security improvement operation.

2.  The method of claim 1, wherein the hybrid embeddings include security transformer model, STM, embeddings (24) of data generated by a STM model (114) from unstructured columns (16) in the security logs (12) and ordinal encodings (22) of data generated by an ordinal encoder (112) from structured columns (14) in the security logs (12), and wherein the STM model (114) is pretrained on security logs (12) using a modified masked language modeling loss.

3.  The method of claim 1 or 2, wherein dynamically generating the prompt (28) further includes:

    identifying important columns (18) in the security logs (12) relevant to the input (10) and security analysis;
    calculating column summaries statistics of the important columns (18);
    subsampling, using a security transformer model, STM, benign logs; and
    including the important columns (18), the column summaries statistics, and the benign logs in the prompt (28).

4.  The method of any preceding claim, wherein the anomaly (26) is detected by a random forest analysis of the hybrid embeddings (20).

5.  The method of any preceding claim, further comprising:

    filtering the security logs (12) based on entropy;
    creating a filtered subset of the security logs (12);
    grouping the filtered subset of the security logs (12) into clusters;
    performing a subsampling of each cluster of the clusters; and
    generating a second prompt with instructions to include information about each cluster in the summary (30).

6.  The method of claim 5, further comprising:

    automatically identifying a cluster of the clusters;
    generating the hybrid embeddings (20); or
    removing the cluster from the security logs where the anomaly is detected.

7.  The method of any preceding claim, further comprising:

    generating an anomaly score of the anomaly (26) detected and the summary (30) provided by the generative artificial intelligence model (116); and
    presenting, on a display, the anomaly score.

8.  The method of any preceding claim, further comprising:

    receiving an action to take in response to the anomaly (26) and the summary (30); and
    preventing a cybersecurity risk by implementing the action.

9.  A device comprising:

a memory to store data and instructions; and
a processor operable to communicate with the memory, wherein the processor is operable to:

generate hybrid embeddings (20) from security logs (12) in response to receiving an input (10);
detect, using the hybrid embeddings (20), an anomaly (26) in the security logs (12);
dynamically generate a prompt (28) with instructions for providing a summary (30) of the anomaly (26);
provide, to a generative artificial intelligence model (116), the prompt (28) with the instructions;
receive, from the generative artificial intelligence model (116), the summary (30) of the anomaly (26); and
provide an output summary (30) of the anomaly (26) to a security mitigation agent configured to perform a security improvement operation.

10. The device of claim 9, wherein the hybrid embeddings (20) include security transformer model, STM, embeddings (24) of data generated by a STM model (114) from unstructured columns (16) in the security logs (12) and ordinal encodings (22) of data generated by an ordinal encoder (112) from structured columns (14) in the security logs (12), and
wherein the STM model (114) is pretrained on security logs (12) using a modified masked language modeling loss.

11. The device of claim 9 or 10, wherein the processor is further operable to dynamically generate the prompt (28) by:

identifying important columns (18) in the security logs (12) relevant to the input (10) and security analysis;
calculating column summaries statistics of the important columns (18);
subsampling, using a security transformer model (114), STM, benign logs; and
including the important columns (18), the column summaries statistics, and the benign logs in the prompt (28).

12. The device of any of claims 9 to 11, wherein the processor is further operable to:

filter the security logs (12) based on entropy;
create a filtered subset of the security logs (12);
group the filtered subset of the security logs (12) into clusters;
perform a subsampling of each cluster of the clusters; and
generate a second prompt with instructions to include information about each cluster in the summary (30).

13. The device of claim 12, wherein the processor is further operable to:

automatically identify a cluster of the clusters;
generate the hybrid embeddings (20) for the cluster; or
remove the cluster from the security logs where the anomaly (26) is detected.

14. The device of any of claims 9 to 13, wherein the processor is further operable to:

generate an anomaly score of the anomaly (26) detected and the summary (30) provided by the generative artificial intelligence model (116), wherein the anomaly is detected by a random forest analysis of the hybrid embeddings (20); and
present, on a display, the anomaly score.

15. The device of any of claims 9 to 14, wherein the processor is further operable to:

receive an action to take in response to the anomaly (26) and the summary (30); and
prevent a cybersecurity risk by implementing the action.

**FIG. 1**

**FIG. 2**

300

| ActionType TenantID AdditionalFields ErrorCode ErrorDescription 302 | → STM + CTE → | Hybrid Embeddings 304 | → Isolation Forest → | Anomalies 306 | → GPT4 → | Summaries 308 | → GPT4 → | Titles 310 |

**FIG. 3**

| ActionType    TenantID<br>ErrorCode    AdditionalFields<br>ErrorDescription<br>_402_ | → | Filter Columns<br>Based On Entropy<br>_404_ | → | Clustering<br>_406_ | → | Subsample<br>Each Cluster<br>_408_ | → | Summaries<br>_410_ |

400

⋮

**FIG. 4**

Advanced Hunting

New Query +

[ Run Query ] [ Last 24 Hours ]  [ Save ]  [ Share Link ]

∨ Query～ 10

24
25    DeviceLogonEvents
26      | take 100

Results

Result Insights

Anomalies～ 26

**Title: Unusual Root Account Logon Success from Rarely Active Device and Uncommon Process**

Anomaly is: A successful logon event (ActionType: LogonSuccess) from the root account (AccountName: root) on the device with ID abc1297681394256S and name woodgrove-sf, which is unusual as only 14% of non-anomalous logs show activity from this device.

500

30

**FIG. 5**

600

Generating hybrid embeddings from security logs
in response to receiving an input — 602

↓

Detecting, using the hybrid embeddings, an anomaly in the security logs — 604

↓

Dynamically generating a prompt with instructions for providing a summary of
the anomaly — 606

↓

Providing, to a generative artificial intelligence model, the prompt with the
instructions — 608

↓

Receiving, from the generative artificial intelligence model, the
summary of the anomaly — 610

↓

Providing an output summary of the anomaly to a security mitigation agent — 612

# FIG. 6

700

| Memory 703 |
|---|
| Instructions 705 |
| Data 707 |

Processor 701

Communication Interface(s) 709

719

Input Device(s) 711

Output Device(s) 713

Display Device 715

Display Controller 717

# FIG. 7

Europäisches
Patentamt

European
Patent Office

Office européen
des brevets

# EUROPEAN SEARCH REPORT

**Application Number**

EP 25 21 1209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/289367 A1 (MURPHY BRIAN P [US] ET AL) 29 August 2024 (2024-08-29) | 1,4-9, 12-15 | INV.<br>G06F21/55 |
| A | * paragraph [0169] *<br>* paragraph [0409] - paragraph [0410] *<br>* paragraph [0456] - paragraph [0459] *<br>* paragraph [0510] *<br>* paragraph [0644] *<br>* paragraph [0659] *<br>----- | 2,3,10, 11 | G06F21/57<br>G06N3/0475<br>G06N3/08<br>G06N20/00<br>G06N20/20<br>H04L9/40 |
| Y | HE MINGHUA ET AL: "LLMeLog: An Approach for Anomaly Detection based on LLM-enriched Log Events",<br>2024 IEEE 35TH INTERNATIONAL SYMPOSIUM ON SOFTWARE RELIABILITY ENGINEERING (ISSRE) IEEE,<br>28 October 2024 (2024-10-28), pages 132-143, XP034767076,<br>DOI: 10.1109/ISSRE62328.2024.00023<br>[retrieved on 2024-12-04] | 1,4-9, 12-15 | |
| A | * page 133 *<br>* III. Methodology;<br>page 135 - page 136 *<br>* Fig 4. Description;<br>page 136 *<br>----- | 2,3,10, 11 | |
| A | US 2024/333743 A1 (BAZALGETTE TIMOTHY [GB] ET AL) 3 October 2024 (2024-10-03)<br>* paragraph [0005] - paragraph [0009] *<br>* paragraph [0029] - paragraph [0031] *<br>* paragraph [0071] *<br>----- | 1-15 | |
| A | US 2024/330446 A1 (BULUT MUHAMMED FATIH [US] ET AL) 3 October 2024 (2024-10-03)<br>* paragraph [0003] *<br>* paragraph [0017] - paragraph [0023] *<br>* paragraph [0033] - paragraph [0040] *<br>* paragraph [0066] *<br>* paragraph [0075] - paragraph [0085] *<br>----- | 1-15 | |

**TECHNICAL FIELDS SEARCHED (IPC)**

G06F
G06N
H04L

The present search report has been drawn up for all claims

| Place of search | Date of completion of the search | Examiner |
|---|---|---|
| The Hague | 7 April 2026 | Cosse, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 21 1209

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2026

| Patent document cited in search report | | Publication date | Patent family member(s) | | Publication date |
|---|---|---|---|---|---|
| US 2024289367 | A1 | 29-08-2024 | EP | 4670062 A1 | 31-12-2025 |
| | | | EP | 4670063 A1 | 31-12-2025 |
| | | | EP | 4670066 A1 | 31-12-2025 |
| | | | EP | 4670067 A1 | 31-12-2025 |
| | | | EP | 4670068 A1 | 31-12-2025 |
| | | | EP | 4670069 A1 | 31-12-2025 |
| | | | EP | 4670070 A1 | 31-12-2025 |
| | | | EP | 4670071 A2 | 31-12-2025 |
| | | | EP | 4670073 A1 | 31-12-2025 |
| | | | EP | 4670074 A1 | 31-12-2025 |
| | | | EP | 4670075 A1 | 31-12-2025 |
| | | | US | 2024289367 A1 | 29-08-2024 |
| | | | US | 2024289442 A1 | 29-08-2024 |
| | | | US | 2024289459 A1 | 29-08-2024 |
| | | | US | 2024289535 A1 | 29-08-2024 |
| | | | US | 2024291833 A1 | 29-08-2024 |
| | | | US | 2024291842 A1 | 29-08-2024 |
| | | | US | 2024291850 A1 | 29-08-2024 |
| | | | US | 2024291851 A1 | 29-08-2024 |
| | | | US | 2024291852 A1 | 29-08-2024 |
| | | | US | 2024291853 A1 | 29-08-2024 |
| | | | US | 2024305651 A1 | 12-09-2024 |
| | | | US | 2025286908 A1 | 11-09-2025 |
| | | | US | 2025379885 A1 | 11-12-2025 |
| | | | WO | 2024178294 A1 | 29-08-2024 |
| | | | WO | 2024178296 A1 | 29-08-2024 |
| | | | WO | 2024178299 A1 | 29-08-2024 |
| | | | WO | 2024178302 A1 | 29-08-2024 |
| | | | WO | 2024178307 A1 | 29-08-2024 |
| | | | WO | 2024178309 A1 | 29-08-2024 |
| | | | WO | 2024178311 A1 | 29-08-2024 |
| | | | WO | 2024178316 A1 | 29-08-2024 |
| | | | WO | 2024178320 A2 | 29-08-2024 |
| | | | WO | 2024178323 A1 | 29-08-2024 |
| | | | WO | 2024178327 A1 | 29-08-2024 |
| US 2024333743 | A1 | 03-10-2024 | NONE | | |
| US 2024330446 | A1 | 03-10-2024 | CN | 121195258 A | 23-12-2025 |
| | | | EP | 4689950 A1 | 11-02-2026 |
| | | | US | 2024330446 A1 | 03-10-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63717407